# EUROPEAN PATENT SPECIFICATION

(11) **EP 3 713 042 B1**
(45) Date of publication and mention of the grant of the patent: **07.09.2022**
(21) Application number: 20158658.3
(22) Date of filing: 21.02.2020
(51) Int. Cl.: H02J 50/00, B62B 3/14

(54) **POWER RECEIVING SYSTEM AND POWER SUPPLY SYSTEM**
STROMEMPFANGSSYSTEM UND STROMVERSORGUNGSSYSTEM
SYSTÈME DE RÉCEPTION DE PUISSANCE ET SYSTÈME D'ALIMENTATION ÉLECTRIQUE

(30) Priority: 22.03.2019 JP 2019055515
(43) Date of publication of application: 23.09.2020
(73) Proprietor: Toshiba TEC Kabushiki Kaisha, Shinagawa-ku Tokyo 141-8562 (JP)
(72) Inventor: Oishi, Sadatoshi, Shinagawa-ku, Tokyo 141-8562 (JP); Kato, Masakazu, Shinagawa-ku, Tokyo 141-8562 (JP); Ogishima, Takuya, Shinagawa-ku, Tokyo 141-8562 (JP)
(74) Representative: Bandpay & Greuter

(56) References cited:
- CN-U- 206 727 739
- KR-A- 20180 029 795

## Description

### FIELD

Embodiments relates to a power receiving system and a power supply system.

### BACKGROUND

In recent years, it has been proposed to install electronic devices on a shopping cart to provide various services to a user of the cart. Any battery mounted on the cart to supply power to electronic devices on the cart will need to be regularly charged. In order to charge the battery provided on a cart, various power supplying mechanisms can be used to supply power to the cart. For example, the battery can be charged in a non-contact manner when the cart is disposed in a storage position (e.g., a cart charging station). For non-contact power transmission, it is important to align the antenna on the power receiving side with the antenna on the power transmission side in order to efficiently transmit electric power. A power supplying system in which a non-contact power transmission technology is utilized includes a receiving coil located on the cart and a transmitting coil of a power transmitting system for supplying power to the receiving coil of the cart when the cart is housed in a cart storage location.

However, since carts are compactly housed in a storage located, it is often the case that portions of one cart overlap with portions of another cart. For example, shopping carts are configured to be stored in a nested manner. As such, the receiving coil in one such stored cart is often in close proximity to the receiving coils of the carts nested to the front and rear of the stored cart when housed in the storage position. When a receiving coil of one cart is in close proximity to the receiving coil of another cart, each transmitting coil corresponding to the receiving coils must be arranged to face and be close to the corresponding receiving coil. When two receiving coils are adjacent to a transmitting coil provided for charging one cart, the resonant frequency for receiving power from the transmitting coil may change and the transmission efficiency may decrease. Document KR 2018 0029795 A discloses a cart including at least one wireless power transceiver disposed in parallel with the lower surface.

### BRIEF DESCRIPTION OF THE DRAWINGS

FIG. 1 is a perspective view of a cart on which a power receiving device to receive power from the power supply system according to the first and second embodiments is mounted.
FIG. 2 is a perspective view showing an example of a configuration of a power supply system according to a first embodiment.
FIG. 3 is a schematic diagram showing a cart carrying a power receiving system to be powered by a power supply system according to a first embodiment housed at a storage position.
FIG. 4 is a block diagram of a control system in a power supply system according to a first embodiment.
FIG. 5 is a block diagram of a power supply system according to a modification of the first embodiment.
FIG. 6 is a perspective view of a power supply system according to a second embodiment.
FIG. 7 is a schematic diagram showing a cart carrying a power receiving system to be powered by a power supply system according to a second embodiment housed at a storage position.
FIG. 8 is a block diagram of a control system in a power supply system according to a second embodiment.

### DETAILED DESCRIPTION

Aspects of the invention are disclosed in independent claims 1 and 7.

According to an embodiment, a power receiving system includes a first receiving coil, a second receiving coil, a receiving circuit, a switching circuit, and a shorting circuit. The first receiving coil is at a first location on the cart. The second receiving coil is at a second location different from the first location on the cart. The receiving circuit generates direct current (DC) power from the power received by the first receiving coil or the second receiving coil. The switching circuit connects one of the first and second receiving coils to the receiving circuit. The shorting circuit disables the other one of the first and second receiving coils.

The power receiving apparatus may further comprise a control circuit connected to the shorting circuit and configured to control which one of the first receiving coil and the second receiving coil is disabled by the shorting circuit.

Preferably, the shorting circuit disables the one of the first receiving coil and the second receiving coil by grounding the one of the first receiving coil and the second receiving coil.

Preferably, the first location is on a first side of the cart and the second location is on a second side of the cart opposite the first side.

The first location on the cart is adjacent to a first caster of the cart.

The second location is adjacent to a second caster of the cart, the first and second casters being at back side portion of the cart.

The power receiving apparatus may further comprise a radio unit configured to receive wireless communication from a power transmitting system indicating which one of the first receiving coil or the second receiving coil is to be connected to the receiving circuit by the switching circuit.

The power receiving apparatus may further comprise an electronic device on the cart.

The power receiving apparatus may further comprise a battery on the cart and connected to the electronic device.

Preferably, the DC power from the receiving circuit is supplied to at least one of the electronic device and the battery.

The present invention further relates to a power transmitting apparatus, comprising:
a plurality of guides including a first guide on a first side and a second guide on a second side opposite the first side, the plurality of guides configured to receive carts in a stacking configuration;
a plurality of first transmitting coils along the first guide, the first transmitting coils being positioned to correspond to a first location on a cart in the stacking configuration;
a plurality of second transmitting coils along the second guide, the second transmitting coils being positioned to correspond to a second location on a cart in the stacking configuration;
a switching circuit connected to a first transmitting coil corresponding to a first location of a stacked cart and a second transmitting coil corresponding to a second location of the stacked cart, the switching circuit configured to selectively connect one of the first transmitting coil or the second transmitting coil to a transmission circuit configured to supply power the connected one of the first and second transmission coils; and
a shorting circuit configured to disable the one of the first transmitting coil and the second transmitting coil not connected to the transmission circuit by the switching circuit.

Preferably, adjacent first transmitting coils in the plurality of first transmitting coils are controlled by a control circuit such that only one of the adjacent first transmitting coils transmits power at a time.

Preferably, adjacent second transmitting coils in the plurality of second transmitting coils are controlled by the control circuit such that only one of the adjacent second transmitting coils transmits power at a time.

Preferably, adjacent second transmitting coils in the plurality of second transmitting coils are controlled by a control circuit such that only one of the adjacent second transmitting coils transmits power at a time.

The present invention further relates to a cart recharging system, comprising: a power transmitting apparatus including: a plurality of guides including a first guide on a first side and a second guide on a second side opposite the first side, the plurality of guides configured to receive carts in a stacking configuration; a plurality of first transmitting coils along the first guide, the first transmitting coils being positioned to correspond to a first location on a cart in the stacking configuration; and a plurality of second transmitting coils along the second guide, the second transmitting coils being positioned to correspond to a second location on a cart in the stacking configuration; a plurality of carts, each cart having: a power receiving apparatus including: a first receiving coil at the first location on the cart; a second receiving coil at the second location on the cart; a receiving circuit configured to generate DC power from power received by the first receiving coil and the second receiving coil; a switching circuit configured to selectively connect one of the first receiving coil or the second receiving coil to the receiving circuit; and a shorting circuit configured to disable the one of the first receiving coil and the second receiving coil not connected to the receiving circuit by the switching circuit.

Preferably, the first location on the cart is adjacent to a first caster of the cart.

Preferably, the second location is adjacent to a second caster of the cart.

Preferably, the first and second casters are at back side portion of the cart.

Preferably, the plurality of guides are positioned to accept the first and second casters of the cart.

The cart recharging system may further comprise an electronic device on each cart.

The cart recharging system may further comprise a battery on each cart and connected to the electronic device on the cart.

Preferably, the DC power from the receiving circuit of the power receiving apparatus on the cart is supplied to at least one of the electronic device and the battery.

The power transmitting apparatus may further comprise: a switching circuit connected to a first transmitting coil corresponding to a first location of a stacked cart and a second transmitting coil corresponding to a second location of the stacked cart, the switching circuit configured to selectively connect one of the first transmitting coil or the second transmitting coil to a transmission circuit configured to supply power the connected one of the first and second transmission coils.

The power transmitting apparatus may further comprise a shorting circuit configured to disable the one of the first transmitting coil and the second transmitting coil not connected to the transmission circuit by the switching circuit.

Hereinafter, a power supply system according to certain example embodiments will be described with reference to the drawings.

### First Embodiment

First, a power supply system according to a first embodiment will be described.

The power supply system includes a power receiving system including two power receiving units installed in each cart, and a power transmitting system including a power transmitting unit corresponding to the positions of a plurality of carts that can be housed at a storage position. The power supply system is a system for transmitting power in a non-contact manner to a receiving coil installed in each cart in accordance with the position at which the cart is housed in the storage position. The power transmitting unit of the power transmitting system transmits power in a state in which the power transmitting unit of the power receiving system is not physically connected to, or otherwise contacting, the power receiving unit.

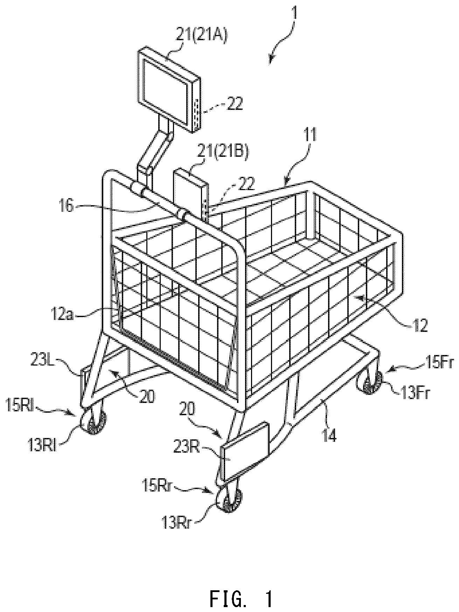

FIG. 1 is a diagram illustrating an example of a configuration of a cart 1 for a power supply system according to a first embodiment. Power supplied by the power supply system is received by a power receiving system 20 mounted on the cart 1.

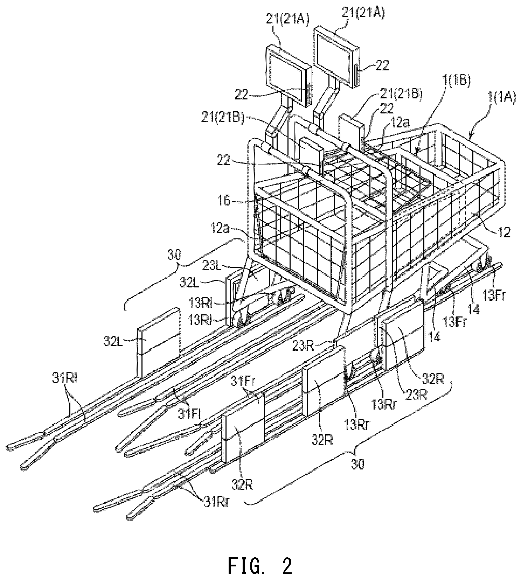

Cart 1 is depicted as a shopping cart, but, in general, cart 1 can be any cart, mobile unit, hand truck, or moving body. The power supply system includes a power transmitting system 30 (see FIG. 2) for transmitting power in a non-contact manner and a power receiving system 20 for receiving power transmitted in a non-contact manner.

The power receiving system 20 is a power receiving device that is mounted on the cart 1. Power receiving system 20 includes a power receiving unit 23 that receives power transmitted in a contactless manner. For example, the power receiving system 20 charges the battery 22 mounted on the cart 1 by using the power received by the power receiving unit 23. The power transmitting system 30 is a power transmitting device for supplying power to the power receiving system 20. The power transmitting system 30 includes a power transmitting unit 32 that transmits power that can be received by the power receiving system 20 mounted on the cart 1. For example, the power transmitting system 30 is configured to transmit electric power to the power receiving system 20 while the cart 1 is housed at a storage position (cart storage location). The power transmitting system 30 transmits electrical power by utilizing the power transmitting unit 32.

The battery 22 is, for example, a power supply unit that supplies power to an electronic device 21 mounted on the cart 1. In this example, it is assumed that each cart 1 is provided with a battery 22, an electronic device 21, and a power receiving system 20. The battery 22 may be mounted on the cart 1 as a separate device from the electronic device 21 or may be integrated with the electronic device 21.

The cart 1 comprises a cart body 11, an electronic device 21 having a battery 22, a power receiving unit 23R, and a power receiving unit 23L). The cart body 12 has a form permitting a user to store commodities therein and is able to carry stored commodities. The electronic device 21 is an apparatus for providing information to user or providing services to the user. The battery 22 is a power supply unit for operating the electronic device 21. The power receiving units 23R and 23L receives electric power transmitted from an external device. The electronic device 21 charges the battery 22 by the power received by the power receiving unit 23R or the power receiving unit 23L.

Note, in some examples, the battery 22 may be an external power supply provided separately from the electronic device 21 rather than integrated with or housed within the electronic device 21. The battery 22 when configured an external power supply can include a charging circuit for charging the battery with electric power from the power receiving unit 23R or 23L, by which the battery 22 is rechargeable. In this case, the battery 22 may be configured to supply stored electric power to the electronic device 21.

The cart body 11 includes a basket 12 for storing articles such as goods and packages. The basket 12 is supported by a frame 14 provided with four casters 15 (15 Fr, 15Fl, 15Rr, 15RI). Four casters 15 are provided at the 4 corners of the lower part of the frame 14. Each caster 15 (15Fr, 15FI, 15Rr, 15RI) has a wheel 13 (13Fr, 13FI, 13Rr, 13RI) that rotates in the direction of movement. The cart body 11 is moved by rolling the wheels 13 of each caster 15 along on a floor. Each caster 15 is configured so that the wheels 13 can be freely rotated to face any direction. Thus, the cart body 11 can freely move in different directions.

A handle 16 is provided on one side of the basket 12. The handle 16 can be gripped by the user. The user grasps the handle 16 while moving the cart body 11. In this example, the direction in which the basket 12 is pushed by user on the handle 16 side of the basket 12 is assumed to be the forward direction for the cart 1. A wheel 13Fr supported by the caster 15Fr is thus a right front wheel, and a wheel 13FI supported by the caster 15FI is a left front wheel. A wheel 15Rr supported by the caster 13Rr is a right rear wheel, and a wheel 13RI supported by the caster 15RI is a left rear wheel.

A lower portion of the frame 14 provided at the four corners where the four casters (15Fr, 15FI, 15RI, 15Rr) are respectively provided narrows toward the forward direction end and is wider at the backward direction side. Therefore, the width between casters 15Fr and 15FI supporting the front wheels is narrower than the width between casters 15Rr and 15RI supporting the rear wheels. Thus, when a plurality of carts are stored in a front-to-back manner, the frame 14 of the rear cart can be housed substantially within the frame 14 of the preceding cart in the storage stack.

In the this description, the side of the basket 12 opposite the handle 16 side is referred to as a front side, and the other side (the handle 16 side) is referred to as a back side. The basket 12 has an openable side 12a at the back side of the basket 12. The openable side 12a swings at point on an upper end side of the openable side 12a to open and close. The basket 12 narrows in width towards the front side. Thus, when multiple carts 1 are pushed together (referred to as "stacked" or "nested") in a front-to-back manner, the openable side 12a of a preceding cart is pushed up (open) by the front end of the next cart 1 added to the stack and portions of the stacked carts 1 are overlapped with each other.

The electronic device 21 is attached to the cart body 11. In the example configuration shown in FIG. 1, the electronic device 21 is provided with a battery 22 and is attached to the handle 16. The electronic device 21 is driven by electrical power from the battery 22. In this example, the electronic device 21 is an information terminal such as a tablet computer for providing information to the cart user, or a commodity reader for acquiring information about a commodity selected and scanned by the user. The electronic device 21 may be also or instead be a charging device for charging a portable terminal (for example, a cellular phone, a smartphone, a digital camera, or the like), provided by the user or the like, using the electric power from the battery 22.

In the configuration example shown in FIG. 1, the electronic device 21 is a tablet terminal 21A and a commodity reader 21B. The tablet terminal 21A is a computer having a display unit provided with a touch panel. The tablet terminal 21A is provided with a display portion directed toward a user who is positioned on the handle 16 side of the cart 1. The tablet terminal 21A displays information of a commodity (product) that has been read by the commodity reader 21B. In some examples, the tablet terminal 21A may also perform a settlement process (e.g., purchase of commodities via a credit card or the like) on the commodity or commodities that have been read by the commodity reader 21B.

The commodity reader 21B is an apparatus for reading information from a commodity. The commodity reader 21B may itself have a display unit that displays information about a commodity that has been scanned by the user. In this example, the commodity reader 21B is an RFID tag reader for reading RFID tags attached to commodities as those tagged commodities are being put in the basket 12 by the user. The commodity reader 21B may also track the removal of tagged commodities from the basket 12. Also, the commodity reader 21B may, in addition to or instead of an RFID tag reader, be a scanner for reading commodity identification information such as a barcode attached to the commodity.

The electronic device 21 may be provided with an interface device (e.g., a dock) for connecting a portable terminal (a smartphone, a tablet terminal, or the like) provided by the user. Such a user-provided portable terminal may be used in place of a store-provided tablet terminal 21A. The user-provided portable terminal connected to the interface device may perform substantially the same processing as that of the tablet terminal 21A described above. The interface device may charge the user-provided portable terminal. The interface device may include a battery 22 or may be connected to a battery 22 provided separately.

In the present embodiment, power receiving units 23R, 23L are attached to the cart 1. In the configuration example shown in FIG. 1, two power receiving unit 23r, 23l are attached to cart body 11. The power receiving unit 23R is attached to the right side of the cart body 11, and the power receiving unit 23L is attached to the left side of the cart body 11. The two power receiving units 23R, 23L have receiving coils that receive power from a transmitting coil.

In FIG. 1, the receiving coil of power receiving unit 23R is attached to the outer side on the right side face of cart body 11. The power receiving unit 23R is provided above the rear wheel 13Rr with the power receiving surface of the receiving coil facing towards the right and substantially perpendicular to the floor. According to the configuration shown in FIG. 1, the receiving coil of the power receiving unit 23R can receive power output from a transmitting coil disposed on the right side of the cart body 11 when the cart 1 is housed in the storage position.

In the configuration example shown in FIG. 1, receiving coil of power receiving unit 23L is attached to the outer side on the left side surface of cart body 11. The power receiving unit 23L is provided above the rear wheel 13RI with the power receiving surface of the receiving coil facing to the left and substantially perpendicular to the floor. According to the configuration shown in FIG. 1, the receiving coil of the power receiving unit 23L can receive power output from a transmitting coil disposed on the left side of the cart body 11 when the cart 1 is housed in the storage position.

The present disclosure is not limited to a configuration in which a power receiving system includes a plurality of power receiving units, nor is the present disclosure limited to a cart 1 configuration including only two receiving coils or only one on the left side or only one on the right side. In general, so long as at least two receiving coils of different carts do not overlap with each other when two carts are stored together (stacked). For example, in some examples, a receiving coil may be provided on either of the left and right sides of the carts 1, and another receiving coil may be provided on the bottom surface of the cart body 11 of each cart 1. Two receiving coils may be provided on each cart 1 in two different positions such as on one side (left/right) and on the bottom side.

In the present embodiment, two power receiving units 23R and 23L mounted on each cart 1 are able to receive electric power via either one of them. As will be described later, a power transmitting system transmits power from a transmitting coil disposed on one side of each cart 1 when housed in the storage position. Correspondingly, in each cart 1, a receiving coil of the power receiving unit facing the transmitting coil is enabled, and a receiving coil of the power receiving unit on the side where the transmitting coil is not disposed is disabled.

The power receiving coil of power receiving unit 23 opposite the transmitting coil provides power to electronic device 21 or battery 22. In contrast, disabled receiving coils of the cart 1 will not adversely affect the contactless power transmission from adjacent transmitting coils disposed opposite to the other receiving coil. The configuration of the control system of a power receiving system including the two power receiving units 23 will be described below.

Next, the configuration of the power supply system according to the first embodiment will be described.

FIG. 2 is a perspective view showing a state in which carts 1 mounted with a power receiving system are housed at a storage position equipped with a power supply system according to the first embodiment.

Each cart 1 carrying a power receiving system 20 is housed at a predetermined storage position (also referred to as a cart storage location). In FIG. 2, two carts 1 (1A, 1B) are housed at a storage position, but, in general, more than two carts 1 can be housed in a nested manner (stacked) at the storage position. When a plurality of carts 1 are nested together, the receiving coil in each cart 1 is at a predetermined position so as not to overlap with the receiving coils of the other adjacently stacked carts.

The housing position is provided with four guide rails (31Rr, 31Rl, 31Fr, 31Fl) for guiding the respective wheels (13Rr, 13RI, 13Fr, 13FI) of the four casters (15Rr, 15RI, 15Fr, 15FI) of each cart 1. Guide rails (31Rr, 31Rl, 31Fr, 31Fl) are guide devices for guiding each cart 1 to a predetermined position in a cart storage location. In the example shown in FIG. 2, one pair of guide rails 31Rr, 31Rl correspond to the rear wheels of the cart 1 and one pair of guide rails 31Fr, 31Fl correspond to the front wheels of the cart 1 are provided. However, the guide rails are not limited to the configuration in which the four guide rails are arranged, and, in general, any number of guide rails may be utilized as long as each cart 1 is guided to a separate predetermined position in the cart storage location. For example, the arrangement of guide rails may omit any one or two of the four depicted guide rails 31Rr, 31Rl, 31Fr, and 31Fl.

In the storage position, each cart 1 is housed in a state where a wheel is moved along a guide rail and the front and rear carts in the stack (nesting) overlap each other. The front side of the basket 12 in the cart 1 is, as described, an openable side 12a which swings opened and closed. Further, the basket 12 is formed to have a smaller surface on the distal end side than the proximal end side on which the openable side 12a is formed. Thus, when the front side of the basket 12 of the rear cart 1B is pushed into the openable side 12a of the cart 1A, the openable side 12a of the cart 1A is pushed towards the front direction and upward. When the rear cart 1B is pushing up the openable side 12a of the front cart 1A, the basket 12 of the cart 1B overlaps with the basket 12 of the cart 1A.

The frame 14 of each cart 1 is formed such that its back end side is wider than its front end side. Therefore, casters 15Fr, 15FI supporting front wheels 13Fr, 13FI of cart 1 closer in to each other than casters 15Rr, 15RI supporting rear wheels 13Rr, 13RI. Thus, when a plurality of carts 1 are stacked, the frame 14 of the rear cart 1B overlaps with the frame 14 of the front cart 1A.

As described above, a plurality of carts 1 (1A, 1B) are housed overlapped with each other when housed in a cart storage location. The amount of possible overlap of each cart 1 depends on the particular shapes of the frame 14 and the basket 12 of each cart 1. When the interval between the front and rear of each cart 1 stored in a stacked state at the storage position is a predetermined distance, the interval at which the receiving coil of each power receiving unit 23R, 23L of each cart 1 is also at a predetermined distance. However, in this example, it is assumed that power receiving units 23R of stacked carts 1 do not overlap with each other. In this embodiment, it is assumed that the receiving coil of each cart 1 will be adjacent to the receiving coil of the adjacent carts 1 in the stack, as depicted in FIG. 2.

Power transmitting units 32R, 32L supply power that can be received by power receiving units 23R, 23L in a non-contact manner. Each power transmitting unit 32R, 32L has a transmitting coil and a transmitting circuit. The transmitting coil of a power transmitting unit 32R, 32L is provided at a position that opposes a receiving coil of a power receiving unit 23R, 23L in each cart 1 when housed in the storage position. In the power supply system according to the first embodiment, transmitting coils of power transmitting unit 32R, 32L are alternately arranged on the right side and the left side of the carts 1 housed at the storage position as shown in FIG. 2.

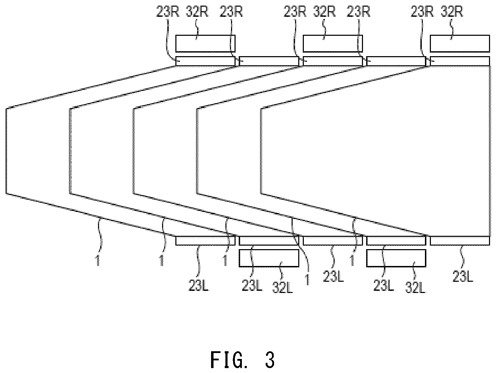

FIG. 3 is a diagram illustrating a relationship between a receiving coil and a transmitting coil provided in each cart 1 in the power supply system according to the first embodiment, from a perspective looking downwards from above the cart storage location.

FIG. 3 schematically shows the positional relationship between the receiving coils of five carts 1 housed at the storage position and the transmitting coils at the storage position. In the power transmitting system according to the first embodiment, a transmitting coil (first transmitting coil) of a power transmitting unit 32R is disposed on the right side of every other cart 1 (the odd numbered positions at the storage position. A transmitting coil (second transmitting coil) of a power transmitting unit 32L is disposed on the left side surface of every other cart 1 (the even numbered positions) at the storage position.

In the example shown in FIG. 3, the transmitting coil of a power transmitting unit 32R is arranged to face the receiving coil of a power receiving unit 23R provided on the right side surface of the carts 1 at the first, third, and fifth positions in the stack. The transmitting coil of a power transmitting unit 32L is arranged to face the receiving coil of a power receiving unit 23L provided on the left side surface of carts 1 at the second and fourth positions in the stack. Accordingly, the power transmitting system is configured such that the transmitting coils are alternately arranged along both sides of the plurality of carts at the storage position.

Next, the configuration of the control system of the power supply system according to the first embodiment will be described.

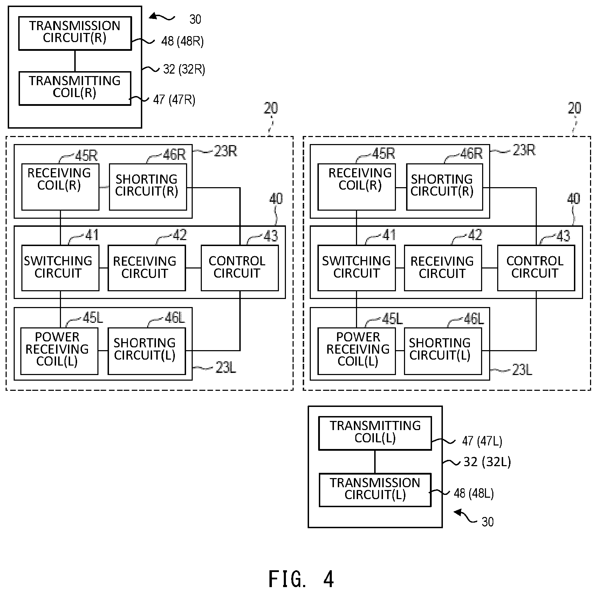

FIG. 4 is a block diagram showing an example of a configuration of a control system in a power supply system according to a first embodiment.

The power supply system is a system for transmitting electric power in a non-contact manner, and comprises a power receiving system 20 and a power transmitting system 30. The power receiving system 20 is a system in which a power receiving unit 23R, 23L receives power in a non-contact manner, and supplies the received power to the battery 22 or the electronic device 21. The power transmitting system 30 is a system for transmitting power to the power receiving units 23R, 23L mounted on each cart 1 in a non-contact manner. The power transmitting system 30 includes a plurality of power transmitting units 32R, 32L disposed along guide rails at the storage position. Direct current (DC) power is supplied to each power transmitting unit 32R, 32L via an alternating (AC) adapter or the like which is connected to a commercial power supply.

In the configuration shown in FIG. 4, each power transmitting unit 32 (32R, 32L) in power transmitting system 30 includes a transmission circuit 48 (48R or 48L, respectively) and a transmitting coil 47 (47R or47L, respectively). The power transmitting unit 32 may be provided with a control circuit for controlling each circuit. The control circuit may be implemented, for example, as a processor for executing the arithmetic processing and a memory for storing the program executed by the processor. The power transmitting unit 32 may include a power supply circuit for converting a voltage from an external AC power supply to a voltage suitable for the operation of each circuit. Further, the power transmitting unit 32 may include a display unit such as an indicator switching the displayed colors according to the present operating state.

Each transmission circuit 48 generates power that is output from a transmitting coil 47. The transmission circuit 48 supplies the generated power to the transmitting coil 47 for transmission. The transmission circuit 48 generates AC power by switching DC power supplied from a power supply. A transmitting coil 47 outputs power receivable by a corresponding power receiving unit 23R, 23L in response to the power supplied from the transmission circuit 48. The transmitting coil 47 has a planar surface for transmitting electric power. The transmitting coil 47 is disposed to face the power receiving surface of a power receiving unit 23R, 23L.

The transmitting coil 47 is connected in series or parallel with a capacitor to form a resonant circuit (transmission resonant circuit). The transmitting coil 47 in the power transmitting resonance circuit generates a magnetic field corresponding to the AC power provided from the transmission circuit 48. The transmitting coil 47 may be configured as, for example, a wound structure in which an insulated electric wire is wound in coil or the like, or may be as a coil pattern on a printed circuit board or the like.

Next, a description will be given of the power receiving system 20.

In the example configuration shown in FIG. 4, a power receiving system 20 mounted on each cart 1 includes two power receiving units 23R, 23L and a controller 40. Each power receiving unit 23R, 23L has a receiving coil (45R or 45L, respectively and a shorting circuit 46 (46R, 46L). The controller 40 includes a switching circuit 41, a receiving circuit 42, and a control circuit 43. Also, the power receiving system 20 may be provided with a display for displaying an operating state.

In the example configuration shown in FIG. 4, power receiving unit 23R includes receiving coil 45R and shorting circuit 46R, and power receiving unit 23L includes receiving coil 45L and shorting circuit 46L.

Each power receiving coil 45R, 45L includes a coil to receive power transmitted from a transmitting coil 47R, 47L. A coil for power reception may be configured as a wound structure in which insulated electric wires are wound, or may a coil pattern formed on a printed circuit board. For example, a receiving coil 45R, 45L comprises a resonant circuit (a power receiving resonant circuit) including a capacitor in series or in parallel. When shorting circuit 46R, 46L is not short-circuited, each receiving coil 45R, 45L electromagnetically couples with an adjacent transmitting coil 47 to generate an induced current by the magnetic field output from transmitting coil 47. Thus, receiving coil 45R, 45L receives power from transmitting coil 47 as AC power.

Each power receiving coil 45R, 45L functions as an AC power supply while receiving AC power from transmitting coil 47. When the magnetic field resonance system is used for the power transmission, the self-resonant frequency of the power receiving resonance circuit (the active one of receiving coil 45R or 45L) is substantially the same as the frequency at which the power transmitting unit 32R or 32L transmits power. As a result, power transmission efficiency is improved when the transmitting coil (45R or 45L) and the transmitting coil 47 are electromagnetically coupled to each other.

The receiving coils 45R, 45L are configured so that a power receiving surface for receiving electric power is flat. The receiving coils 45R, 45L are installed in the cart body 11 in a position and a direction corresponding to the transmission surface of a respective transmitting coil 47 at the housing position. In the configuration example shown in FIG. 2, each receiving coil 45R, 45L is disposed on a side surface of the cart body 11 with the power receiving surface substantially perpendicular to the floor surface. Accordingly, each receiving coil 47R or 45L of each cart 1 faces the power transmitting surface of a transmitting coil 47 at the storage position which is also substantially perpendicular to the floor surface.

In the configuration shown in FIG. 4, a shorting circuit 46R or 46L is respectively connected to each receiving coil 45R, 45L. Each shorting circuit 46R, 46L is a circuit for disabling reception of power from the transmitting coils 47. Shorting circuits 46R, 46L disable receiving coils 45R, 45L by shorting the receiving coils. More particularly in this example, the shorting circuits 46R, 46L disable the respective receiving coils 45R, 45L by shorting the receiving coils to ground. The shorting circuit 46R, 46L short-circuits and disables the respective receiving coil 45R, 45L in response to a control signal from a control circuit 43 of a controller 40.

Each controller 40 includes a switching circuit 41, a receiving circuit 42, and a control circuit 43. In the configuration example shown in FIG. 4, the controllers 40 are provided separately from the power receiving unit 23R and the power receiving unit 23L in each power receiving system 20. A controller 40 is attached to each cart 11 main body. In other examples, the controller 40 may be integrated with either the power receiving unit 23R or the power receiving unit 23L. The switching circuit 41 of the controller 40 is connected to receiving coils 45R and 45L. The control circuit 43 of each controller 40 is also connected to shorting circuit 46R of power receiving unit 23R and shorting circuit 46L of power receiving unit 23L.

A receiving coil 45R, 45L, which is not shorted by the shorting circuit 46, can receive power from the transmitting coil 47. An active one of the receiving coils 45R, 45L supplies power to the receiving circuit 42 via the switching circuit 41. The switching circuit 41 connects either the receiving coil 45R or the receiving coil 45L to the receiving circuit 42. The switching circuit 41 includes a switching circuit for turning on the appropriate one of the receiving coil 45R or the receiving coil 45L.

The receiving circuit 42 converts power received from the receiving coil 45R or receiving coil 45L as connected by the switching circuit 41 into electric power that can be supplied to the battery 22 or the electronic device 21. For example, the receiving circuit 42 rectifies the received power supplied from the receiving coils 45R, 45L, and converts this received power into a direct current. The receiving circuit 42 is realized by a circuit including a rectifying bridge constituted by diodes. In this example, a pair of input terminals of the rectifier bridge are connected to a receiving coil 45R or 45L via switching circuit 41. The receiving circuit 42 in this example full-wave rectifies the received power and outputs DC power from the pair of output terminals.

The control circuit 43 controls the operation of each circuit in the power receiving system 20. The control circuit 43 may be comprised by a microcomputer or the like. The control circuit 43 outputs a signal indicating which one of shorting circuit 46R or 46L is to be shorting the respective one of the receiving coils 45R or 45L. Thus, the control circuit 43 performs control to short-circuit the receiving coil 45R or 45L which is not to receive power. The control circuit 43 also outputs a signal indicating to switching circuit 41 which one of receiving coil 45R or 45L is to receive power. Thus, control circuit 43 functions to connect to receiving circuit 42 to the active one of the two receiving coils 45R and 45L.

The control circuit 43 can operate to identify which one of receiving coil 45R or 45L is actually receiving power from a transmitting coil 47 when the cart 1 is housed at the storage position. The control circuit 43 can switch the switching circuit 41 as appropriate based on detecting which receiving coil 45R, 45L has received power from transmitting coil 47.

When the active receiving coil 45R or 45L is identified , the control circuit 43 operates to short-circuit the receiving coil 45L or 45R that is not to receive power by control of the corresponding shorting circuit 46L or 46R. Control circuit 43 also sets switching circuit 41 to connect the active receiving coil 45R or 45L to receiving circuit 42. In this context, "active" refers to a receiving coil that is presently receiving power from a transmitting coil.

When receiving coil 45R receives power from transmitting coil 47R, control circuit 43 shorts receiving coil 45L with shorting circuit 46L. The receiving coil 45L is shorted and the control circuit 43 connects the receiving coil 45R to the receiving circuit 42 by way of the switching circuit 41. Thus, the control circuit 43 can realize the control for disabling a non-active receiving coil 45R or 45L for which no transmitting coil 47 is adjacent.

As described above, according to the power supply system of the first embodiment, when the cart 1 is housed at the cart storage position (see FIG. 2), the receiving coil (45R or 45L) which is not adjacent to a transmitting coil 47 is short-circuited, and it thus is possible to prevent coupling between adjacent receiving coils (45R or 45L) on different carts 1 when multiple carts are stacked at the cart storage position . As a result, the power receiving system 20 provided in the carts 1 housed at the storage position can more efficiently receive power from the power transmitting system 30 at the storage position.

Modification of the First Embodiment

Next, a modification of the first embodiment will be described.

In the first embodiment, a receiving coil 45R or 45L which receives power from the transmitting coil 47 is identified, and the receiving coil 45R or 45L which does not receive power is short-circuited, but determining which receiving coil 45R or 45L is to be short-circuited may be specified by another method. For example, in the first modification, it is assumed that the power receiving system 20 mounted on each cart 1 has a radio unit 50. With this modification, power receiving system 20 can acquire information indicating which receiving coil 45 or 45L will be active by signal or communication from a power receiving system 20 of the cart 1 that has already been stored at the storage position at the stacking position immediately ahead of the present cart 1 being added to the stack, and thus determines which receiving coil 45 or 45L is to be short-circuited (non-active) according to such a communication from the already stacked/stored cart 1.

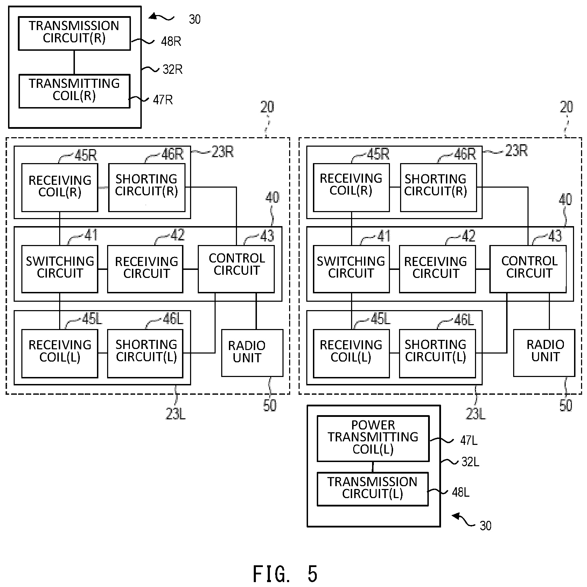

FIG. 5 is a block diagram showing an example of a configuration of a power receiving system 20 according to a modification of the first embodiment.

In the modification shown in FIG. 5, a radio unit 50 (also referred to as a wireless communication circuit 50) is provided in the power receiving system 20 according to the first embodiment. Since configurations other than the radio unit 50 are similar to those of the first embodiment described above, detailed description thereof will not be repeated.

The radio unit 50 has a function of communicating with a radio unit 50 mounted on another cart 1. For example, the radio unit 50 of a cart 1 communicates with a radio unit 50 on a cart 1 housed in front of the cart 1 at the storage position. Thus, the control circuit 43 can acquire information via radio unit 50 indicating whether an already stored cart 1 is receiving power on receiving coil 45R or 45L. The control circuit 43 controls to receive power at the receiving coil (45R or 45L) on the side opposite to the active receiving coil 45R or 45L on the already stacked cart 1..

In another example, the radio unit 50 may have a function of wirelessly communicating with a power transmitting unit 32 (32R, 32L) of power transmitting system 30. In this case, transmitting system 30 may be provided with a radio unit for performing wireless communication. Thus, control circuit 43 of power receiving system 20 may control elements based on setting information obtained by communication with a power transmitting unit 32. The wireless communication between power receiving system 20 and power transmitting unit 32 may be realized by, for example, a wireless communication circuit that performs wireless communication at the same frequency as the frequency used for power transmission by using load modulation or the like.

As described above, the power supply system according to the modification of the first embodiment and the first embodiment includes a power receiving system 20 to be attached to a cart 1 and a power transmitting system 30 to be disposed at a storage position for the cart 1. The power receiving system 20 has a first receiving coil (23R or 23L) attached to a first location on the cart 1 and a second receiving coil (23L or 23R) attached to a second location on the cart 1. The power transmitting system 30 includes a plurality of transmitting coils 47 alternately positions that will be opposite to the first locations on stacked carts 1 at the storage position and second locations on stacked carts 1 at the storage position. The carts 1 operate to short-circuit the one of the receiving coils (23R or 23L) that is not adjacent to a transmission coil 47 of the power transmitting system at the storage position.

Accordingly, in the power supply system according to the first embodiment, when a cart 1 is housed in the storage position, a receiving coil (23R or 23L) for which a transmitting coil 47 is not provided adjacent thereto can be short-circuited (disabled), and it is thus possible to prevent the inadvertent coupling between adjacent receiving coils (23R or 23L) on stacked carts 1. As a result, the power receiving systems 20 can more efficiently receive power from a power transmitting system 30 at the storage position.

### Second Embodiment

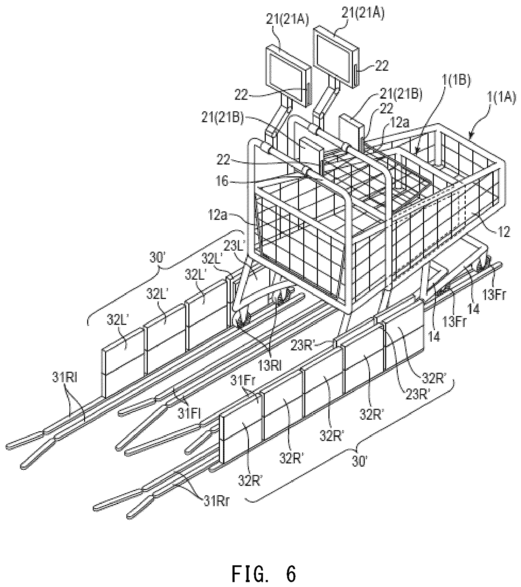

FIG. 6 is a perspective view showing a configuration example of a power receiving system 20' and a power transmitting system 30' constituting the power supply system according to the second embodiment.

The arrangement shown in FIG. 6 differs from the configuration shown in FIG. 2 in the disposition of power transmitting units at the storage location. In the configuration shown in FIG. 6, power transmitting system 30' has power transmitting units 32R', 32L' at each cart storage position at the storage location. That is each cart storage position as a power transmitting unit 32R' and 32L' rather than having power transmitting units 32R and 32R alternating along the stacking direction of carts 1 at the storage location (see Fig. 2).. Other than positioning and inclusion of power transmitting units 32R' and 32L' at the storage position of the carts 1, the second embodiment is similar to the first embodiment.

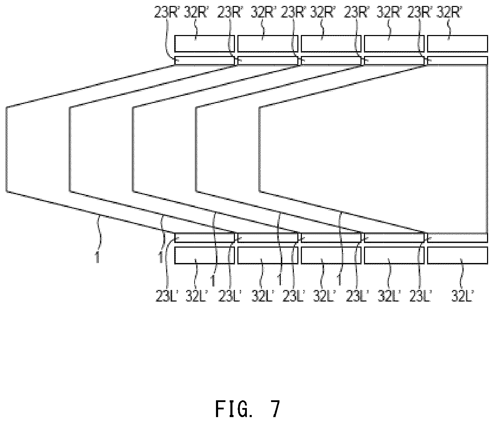

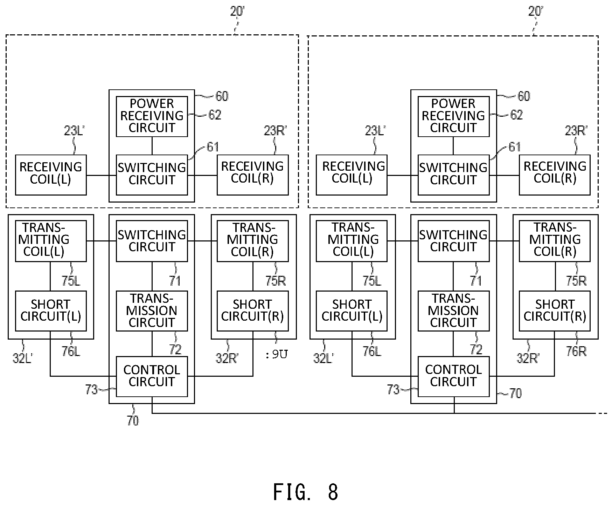

Each cart 1A, 1B is provided with power receiving units 23R', 23L' on respective side surfaces of the cart body 11, similar to the configurations shown in FIGS. 1 and 2. The two power receiving units 23R', 23L' constitute a power receiving system 20' (see FIG. 8) which is mounted on each cart 1. Each cart 1A, 1B when housed in a nested state at a storage position (a cart storage location) as described in the first embodiment, positions the power receiving units 23R', 23L' at predetermined positions along storage position (see FIG. 7).

In the power transmitting system 30' according to the second embodiment, power transmitting units 32R' are arranged side by side along the guide rail 31Rr on the outer side of the guide rail 31Rr. Power transmitting units 32L' are also arranged side by side along the guide rail 31Rl on the outer side of the guide rail 31Rl. Power transmitting coils of the power transmitting unit 32R' and transmitting coils of the power transmitting unit 32L' are arranged at intervals corresponding to the distance between the carts housed at the housing position (storage location). Power transmitting unit 32R' and power transmitting unit 32L' are respectively located on the left and right sides of each individual cart 1 housed at the storage position function. The power transmitting system 30' is a system for supplying power to a plurality of carts 1 housed at a cart storage location.

The power transmitting units 32R', 32L' supply power that can be received by a corresponding power receiving unit 23R', 23L' in a non-contact manner. Each power transmitting unit 32R', 32L' has a transmitting coil and a transmission circuit, etc. similarly to described in the first embodiment. In the power transmitting system 30' according to the second embodiment, transmitting coils of the power transmitting unit 32R' and transmitting coil of the power transmitting unit 32L' are disposed on both the left and right sides of each cart 1 stacked at the storage position. In the power transmitting system 30', the power transmitting unit 32R' and the power transmitting unit 32L' corresponding to the a cart 1 are controlled as one set of power transmitting devices for a respective power receiving systems 20' of a stacked cart 1.

FIG. 7 is a diagram illustrating a positional relationship between a power transmitting units 32R', 32R' and each cart 1 according to the second embodiment. FIG. 7 schematically shows the positional relationship between the receiving coils of five carts 1 housed/stacked at the storage position and the transmitting coils at the storage position. In the power transmitting system according to the second embodiment, transmitting coils of the power transmitting units 32R' are arranged on the right side of the cart body 11 and transmitting coils of the power transmitting units 32L' are disposed on the left side of the cart body 11, for all carts at the storage position.

In the example shown in FIG. 7, a power transmitting unit 32R' and a power transmitting unit 32L' corresponding to the each cart 1 are controlled such that either one of the power transmitting unit 1 R' or the power transmitting unit 1 L' performs the power transmission. For example, a plurality of power transmitting units 32R' arranged side by side along the right side of the storage position are controlled so as to transmit power to every other one of the carts 1 stacked at the storage position.

In other words, among a plurality of transmitting coils 32R', power is transmitted to every other cart 1, and not every transmitting coil 32R' is active, with non-active transmitting coils 32R' being short-circuited. On the other hand, transmitting coils 32L' op opposite an active transmitting coil 32R' do not transmit power (is short-circuited) and only transmitting coils 32L' disposed opposite an non-active transmitting coil 32R' will be active.

A transmitting coil 75R (or 75L) of power transmitting unit 32R' (or 32L') that is not active is short-circuited based on control by a control circuit 73. Opposed pairs of power transmitting units 32R' and 32L' are controlled so only one of the pair is active at a time. The other of the pair is non-active, that is short-circuited when other one of the pair of power transmitting units 32R' and 32L' transmits power. That is, in the second embodiment, the transmitting coils arranged at the left (75L) and right (75R) sides are controlled such that only every other coil along a side is active the other directly adjacent coils on the same side are short-circuited (non-active).

Next, the configuration of the control system of the power supply system according to the second embodiment will be described.

FIG. 8 is a block diagram showing an example of a configuration of a control system in a power supply system according to a second embodiment.

As shown in FIG. 8, a power transmitting unit 32R' a power transmitting unit 32L', and controller 70 form a power transmitting device corresponding to the power receiving system 20' of a cart 1. The power transmitting system 30' can perform power transmission to a plurality of carts 1 housed at a storage position. The power transmitting unit 32R' and the power transmitting unit 32L' corresponding to a single cart 1 are controlled by a single controller 70. In power transmitting system 30', each controller 70 is communicatively coupled to each other controller 70.

In the configuration shown in FIG. 8, a power transmitting unit 32R' includes a transmitting coil 75R, and shorting circuit 76R and power transmitting unit 32L' includes a transmitting coil 75L, and a shorting circuit 76L. The controller 70 includes a switching circuit 71, a transmission circuit 72, and a control circuit 73.

In the example configuration shown in FIG. 8, power transmitting unit 32R' includes transmitting coil 75R and shorting circuit 76R. The power transmitting unit 32L' has a transmitting coil 75L and a shorting circuit 76L. The transmitting coils 75R, 75L output power that can be received by the receiving coils 23R', 23L' of the power receiving units 20'. The transmitting coils 75R, 75L are formed so that each has a power transmitting surface for transmitting electric power that is flat. The transmitting coil 75R, 75L is disposed so that it faces a receiving coil 23R', 23L' in a state that such that it is substantially perpendicular to the floor surface. For example, a transmitting coil 75R, 75L constitutes a transmission resonant circuit when connecting in series or in parallel with a capacitor. For example, a coil for electric power transmission may be configured as a wound structure in which an insulated electric wire is wound in a pattern or may be a coil pattern formed as wiring pattern on a printed circuit board or the like. Active transmitting coils 75R, 75L generate a magnetic field corresponding to AC power from the transmission circuit 72.

The transmitting coils 75R, 75L are at a position opposite a receiving coil 23R', 23L' on a cart 1 when the cart 1 is at a housing position.

In the configuration shown in FIG. 8, a shorting circuit 76R or 76L is respectively connected to each transmitting coil 75R or 75L. Each shorting circuit 76R, 76L is a circuit for disabling a corresponding transmitting coil 75R, 75L. For example, the shorting circuit 76R may disable a transmitting coil 75R by grounding the transmitting coil 75R. The shorting circuit 76R, 76L shorts and disables a transmitting coil 75R, 75L in response to a control signal from the control circuit 73.

Each controller 70 includes a switching circuit 71, a transmission circuit 72, and a control circuit 73. In the configuration example shown in FIG. 8, the controller 70 is provided separately from the power transmitting unit 32R' and the power transmitting unit 32L'. In other examples, the controller 70 may be integrated with either the power transmitting unit 32R' or the power transmitting unit 32L'. The switching circuit 71 in the controller 70 connects to the transmitting coil 75R and the transmitting coil 75L. The control circuit 73 of the controller 70 is connected to the shorting circuit 76R of the power transmitting unit 32R' and the shorting circuit 76L of the power transmitting unit 32L'.

The transmitting coil 75R, 75L, which is not shorted by a corresponding shorting circuit 76R or 76L, outputs power. The active transmitting coil 75R, 75L outputs power supplied from transmission circuit 72 connected via a switching circuit 71. The switching circuit 71 connects either one of the transmitting coil 75R or the transmitting coil 75L to the transmission circuit 72. The switching circuit 71 can turn on either of the transmitting coil 75R or the transmitting coil 75L.

The control circuit 73 controls the operation of the power transmitting system 30'. The control circuit 73 may comprise, for example, a microcomputer or the like. The control circuit 73 outputs a signal indicating a shorting circuit 76R or 76L is to short circuit one of a transmitting coil 75R or 75L. Thus, the control circuit 73 short-circuits the non-active one of transmitting coil 75R or 75L . The control circuit 73 outputs a signal to the switching circuit 71 indicating which one of the transmitting coil 75R or 75L is to be active for power transmission to the power receiving system 20'. Thus, the control circuit 73 controls which one of transmitting coil 75R or 75L is to be connected to the transmission circuit 72 from among the two transmitting coils 75R and 75L.

The control circuit 73 specifies which transmitting coil 75R or 75L. is to be used for actually transmitting power. The control circuit 73 controls which transmitting coil 75R or 75L is to be active such that adjacent transmission coils 75R (and transmission coils 75L) are not active. The control circuit 73 communicates with at least one other control circuit 73 for an adjacent cart position of the power transmitting system 30' so adjacent transmitting coils 75R (and transmitting coils 75) are not active.

Control circuit 73 also functions to short the non-active one of the transmitting coils 75L, 75R by controlling each of the shorting circuits 76L, 76R as appropriate. The control circuit 73 also sets the switching circuit 71 to connect the active one of the transmitting coil 75R or 75L to the transmission circuit 72. For example, when power is to be transmitted from transmitting coil 75R, control circuit 73 shorts transmitting coil 75L by using shorting circuit 76L and connects the transmitting coil 75R to the transmission circuit 72 by using the switching circuit 71.

Next, a description will be given of the power receiving system 20'.

In the example configuration shown in FIG. 8, the power receiving system 20' that is mounted on each cart 1 includes two power receiving units (23R', 23L') and a controller 60. Each power receiving unit 23R', 23L' includes a receiving coil. The controller 60 includes a switching circuit 61 and a power receiving circuit 62.

In FIG. 8, receiving coils 23R', 23L') receive power transmitted from transmitting coils 75 R, 75L. For example, each receiving coil 23R', 23L' is connected in series or in parallel with a capacitor. The receiving coil 23R', 23L' is electromagnetically coupled to an active transmitting coil 75R, 75L, and generates an induced current by the magnetic field output from the active transmitting coil 75R, 75L. Thus, the receiving coil 23R', 23L' receives power from the transmitting coil 75R, 75L as AC power.

In the example configuration shown in FIG. 8, each controller 60 includes a switching circuit 61 and a power receiving circuit 62. Also, the present disclosure relates to a method of manufacturing the same. In FIG. 8, the controller 60 is provided separately from the power receiving unit 23R' and the power receiving unit 23L'. However, the controller 60 may be integrally provided with either the power receiving unit 23R' or the power receiving unit 23L'.

The switching circuit 61 can be controlled to connect the power receiving circuit 62 to either the receiving coil 23R' or the receiving coil 23L'.

The receiving circuit 62 converts power received via the receiving coil 23R' or receiving coil 23L' to power that can be supplied to battery 22 or electronic device 21. For example, the receiving circuit 62 rectifies received power to convert the received power to direct current, similarly to the receiving circuit 42.

In general, the configuration of the power receiving system 20' may be configured in a manner similar to that as shown in FIG. 4 or FIG. 5 (e.g., a radio unit 50 may be incorporated). That is, in the power receiving system 20' according to the second embodiment, a shorting circuit may be connected to each receiving coil, and a control circuit (73) for controlling the shorting circuits 76R, 76L and the switching circuit (71) may be provided. Thus, a receiving coil 76R or 76L which does not receive power can be short-circuited to be disabled.

As described above, the power supply system according to the second embodiment includes a power receiving system 20' to be attached to a cart and a power transmitting system 30' to be disposed at the storage location of the carts 1. The power receiving system has a first receiving coil (23R' or 23L') attached to a first location of each cart 1 and a second receiving coil (23L' or 23R') attached to a second location of the cart 1. The power receiving system 20' receives power from a transmitting coil of the power transmitting system 30' at position corresponding to either the first location or the second location on the cart 1.

The power transmitting system 30' has transmitting coils at positions opposite to each first location of all carts 1 that can be housed (stacked) in the cart storage location and also transmitting coils opposite to each second location of all carts 1 housed in the cart storage location. In the power transmitting system 30', transmitting coils are controlled to transmit electric power such that, at most, only every other one of the transmitting coils along a side of the carts 1 housed in the cart storage location are active simultaneously. In addition, in the power transmitting system 30', those transmitting coils that are not active are short-circuited.

The power transmitting system according to the second embodiment alternates active and non-active transmitting coils such that adjacent carts 1 are charged on opposite sides of the storage location. As a result, it is possible to inhibit the coupling between coils for adjacent carts 1. As a result, receiving coils provided in the carts 1 housed at the storage location can more efficiently receive power from transmitting coils of the power transmitting system 30' at the storage location.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the scope of the present disclosure. The accompanying claims and their equivalents are intended to cover such forms or modifications as would fall within the scope of the present disclosure.

## Claims

1. A power receiving apparatus (20), comprising:
a first receiving coil (45R) at a first location on a cart (1);
a second receiving coil (45L) at a second location different from the first location on the cart (1);
a receiving circuit (42) configured to generate DC power from power received by the first receiving coil (45R) and the second receiving coil (45L);
a switching circuit (41) configured to selectively connect one of the first receiving coil (45R) or the second receiving coil (45L) to the receiving circuit; and
a shorting circuit (46R, 46L) configured to disable the one of the first receiving coil (45R) and the second receiving coil (45L) not connected to the receiving circuit by the switching circuit;
**characterized in that**
the first location on the cart (1) is adjacent to a first caster of the cart (1) and substantially perpendicular to the floor surface, and
the second location is adjacent to a second caster of the cart (1) and substantially perpendicular to the floor surface, the first and second casters being at back side portion of the cart (1).

2. The power receiving apparatus (20) according to claim 1 further comprising:
a control circuit (43) connected to the shorting circuit (46R, 46L) and configured to control which one of the first receiving coil (45R) and the second receiving coil (45L) is disabled by the shorting circuit (46R, 46L).

3. The power receiving apparatus (20) according to claim 1 or 2, wherein the shorting circuit (46R, 46L) disables the one of the first receiving coil (45R) and the second receiving coil (45L) by grounding the one of the first receiving coil (45R) and the second receiving coil (45L).

4. The power receiving apparatus (20) according to any one of claims 1 to 3, wherein the first place is on a first side of the cart (1) and the second location is on a second side of the cart (1) opposite the first side.

5. The power receiving apparatus (20) according to any one of claims 1 to 4, further comprising:
a radio unit configured to receive wireless communication from a power transmitting system indicating which one of the first receiving coil (45R) or the second receiving coil (45L) is to be connected to the receiving circuit by the switching circuit.

6. The power receiving apparatus (20) according to any one of claims 1 to 5, further comprising:
an electronic device on the cart (1); and
a battery on the cart (1) and connected to the electronic device, wherein
the DC power from the receiving circuit is supplied to at least one of the electronic device and the battery.

7. A power transmitting apparatus (30'), comprising:
a plurality of guides including a first guide (31 Rr) on a first side and a second guide (31 Rl) on a second side opposite the first side, the plurality of guides configured to receive carts in a stacking configuration;
a plurality of first transmitting coils (75R) along the first guide (31 Rr), the first transmitting coils (75R) being positioned to correspond to a first location on a cart in the stacking configuration, the plurality of first transmitting coils (75R) being adjacently positioned between each other at intervals corresponding to a distance between one or more carts received at the stacking configuration;
a plurality of second transmitting coils (75L) along the second guide (31 RI), the second transmitting coils (75L) being positioned to correspond to a second location on a cart in the stacking configuration, the plurality of second transmitting coils being adjacently positioned between each other at intervals corresponding to a distance between one or more carts received at the stacking configuration;
a switching circuit connected to a first transmitting coil (75R) corresponding to a first location of a stacked cart and a second transmitting coil corresponding to a second location of the stacked cart, the switching circuit configured to selectively connect one of the first transmitting coil (75R) or the second transmitting coil to a transmission circuit configured to supply power the connected one of the first and second transmission coils;
a shorting circuit configured to disable the one of the first transmitting coil (75R) and the second transmitting coil not connected to the transmission circuit by the switching circuit;
wherein adjacent first transmitting coils in the plurality of first transmitting coils (75R) are controlled by a control circuit such that only one of the adjacent first transmitting coils (75R) transmits power at a time ; and
wherein adjacent second transmitting coils in the plurality of second transmitting coils are controlled by the control circuit such that only one of the adjacent second transmitting coils transmits power at a time.

8. The power transmitting apparatus according to claim 7, wherein adjacent second transmitting coils in the plurality of second transmitting coils are controlled by a control circuit such that only one of the adjacent second transmitting coils transmits power at a time.

9. A cart recharging system, comprising:
a power transmitting apparatus according to claim 7 or 8 and
a plurality of carts, each cart having
a power receiving apparatus according to any one of claims 1 to 6.

10. The cart recharging system according to claim 9, wherein
the first location on the cart is adjacent to a first caster of the cart,
the second location is adjacent to a second caster of the cart,
the first and second casters are at back side portion of the cart, and
the plurality of guides are positioned to accept the first and second casters of the cart.

11. The cart recharging system according to claim 9 or 10, further comprising:
an electronic device on each cart; and
a battery on each cart and connected to the electronic device on the cart, wherein
the DC power from the receiving circuit of the power receiving apparatus on the cart is supplied to at least one of the electronic device and the battery.

12. The cart recharging system according to any one of claims 9 to 11, the power transmitting apparatus further comprising:
a switching circuit connected to a first transmitting coil corresponding to a first location of a stacked cart and a second transmitting coil corresponding to a second location of the stacked cart, the switching circuit configured to selectively connect one of the first transmitting coil or the second transmitting coil to a transmission circuit configured to supply power the connected one of the first and second transmission coils; and
a shorting circuit configured to disable the one of the first transmitting coil and the second transmitting coil not connected to the transmission circuit by the switching circuit.

## Patentansprüche

1. Energieempfangsvorrichtung (20), Folgendes umfassend:
eine erste Empfangsspule (45R) an einer ersten Position an einem Wagen (1),
eine zweite Empfangsspule (45L) an einer zweiten Position an dem Wagen (1), die sich von der ersten Position unterscheidet,
eine Empfangsschaltung (42), die dafür gestaltet ist, aus Energie, die durch die erste Empfangsspule (45R) und die zweite Empfangsspule (45L) empfangen wird, einen Gleichstrom zu erzeugen,
einen Schaltstromkreis (41), der dafür gestaltet ist, wahlweise eine von der ersten Empfangsspule (45R) oder der zweiten Empfangsspule (45L) mit der Empfangsschaltung zu verbinden, und
eine Kurzschlussschaltung (46R, 46L), die dafür gestaltet ist, die eine von der ersten Empfangsspule (45R) und der zweiten Empfangsspule (45L), die nicht durch den Schaltstromkreis mit der Empfangsschaltung verbunden ist, zu deaktivieren,
**dadurch gekennzeichnet, dass**
die erste Position an dem Wagen (1) neben einer ersten Laufrolle des Wagens (1) und im Wesentlichen senkrecht zur Bodenoberfläche liegt und
die zweite Position neben einer zweiten Laufrolle des Wagens (1) und im Wesentlichen senkrecht zur Bodenoberfläche liegt, wobei sich die erste und die zweite Laufrolle an einem hinteren Abschnitt des Wagens (1) befinden.

2. Energieempfangsvorrichtung (20) nach Anspruch 1, ferner Folgendes umfassend:
eine Steuerschaltung (43), die mit der Kurzschlussschaltung (46R, 46L) verbunden und dafür gestaltet ist zu steuern, welche von der ersten Empfangsspule (45R) oder der zweiten Empfangsspule (45L) durch die Kurzschlussschaltung (46R, 46L) deaktiviert ist.

3. Energieempfangsvorrichtung (20) nach Anspruch 1 oder 2, wobei die Kurzschlussschaltung (46R, 46L) die eine von der ersten Empfangsspule (45R) und der zweiten Empfangsspule (45L) deaktiviert, indem sie die eine von der ersten Empfangsspule (45R) und der zweiten Empfangsspule (45L) an die Masse anschließt.

4. Energieempfangsvorrichtung (20) nach einem der Ansprüche 1 bis 3, wobei sich die erste Position an einer ersten Seite des Wagens (1) befindet und sich die zweite Position an einer zweiten, der ersten Seite gegenüberliegenden Seite des Wagens (1) befindet.

5. Energieempfangsvorrichtung (20) nach einem der Ansprüche 1 bis 4, ferner Folgendes umfassend:
eine Funkeinheit, die dafür gestaltet ist, von einem Energieübertragungssystem drahtlose Kommunikation zu empfangen, die angibt, welche von der ersten Empfangsspule (45R) und der zweiten Empfangsspule (45L) durch die Kurzschlussschaltung mit der Empfangsschaltung zu verbinden ist.

6. Energieempfangsvorrichtung (20) nach einem der Ansprüche 1 bis 5, ferner Folgendes umfassend:
ein elektronisches Gerät an dem Wagen (1) und
eine Batterie an dem Wagen (1) und verbunden mit dem elektronischen Gerät, wobei
der Gleichstrom von der Empfangsschaltung mindestens einem von dem elektronischen Gerät und der Batterie zugeführt wird.

7. Energieübertragungsvorrichtung (30'), Folgendes umfassend:
mehrere Führungen, die eine erste Führung (31(Rr) an einer ersten Seite und eine zweite Führung (31Rl) an einer zweiten, der ersten Seite gegenüberliegenden Seite beinhalten, wobei die mehreren Führungen dafür gestaltet sind, Wagen in einer gestapelten Gestaltung aufzunehmen,
mehrere erste Übertragungsspulen (75R) entlang der ersten Führung (31Rr), wobei die ersten Übertragungsspulen (75R) derart positioniert sind, dass sie einer ersten Position an einem Wagen in der gestapelten Gestaltung entsprechen, wobei die mehreren ersten Übertragungsspulen (75R) zwischen einander, nebeneinanderliegend in Intervallen positioniert sind, die einem Abstand zwischen einem oder mehreren Wagen entsprechen, die in der gestapelten Gestaltung aufgenommen sind,
mehrere zweite Übertragungsspulen (75L) entlang der zweiten Führung (31Rl), wobei die zweiten Übertragungsspulen (75L) derart positioniert sind, dass sie einer zweiten Position an einem Wagen in der gestapelten Gestaltung entsprechen, wobei die mehreren zweiten Übertragungsspulen zwischen einander, nebeneinanderliegend in Intervallen positioniert sind, die einem Abstand zwischen einem oder mehreren Wagen entsprechen, die in der gestapelten Gestaltung aufgenommen sind,
einen Schaltstromkreis, der mit einer ersten Übertragungsspule (75R) verbunden ist, die einer ersten Position eines gestapelten Wagens entspricht, und mit einer zweiten Übertragungsspule, die einer zweiten Position des gestapelten Wagens entspricht, wobei der Schaltstromkreis dafür gestaltet ist, wahlweise eine von der ersten Übertragungsspule (75R) oder der zweiten Übertragungsspule mit einer Übertragungsschaltung zu koppeln, die dafür gestaltet ist, der angeschlossenen einen von der ersten und der zweiten Übertragungsspule Energie zuzuführen,
eine Kurzschlussschaltung, die dafür gestaltet ist, die eine von der ersten Übertragungsspule (75R) und der zweiten Übertragungsspule, die nicht mit der Übertragungsschaltung verbunden ist, zu deaktivieren,
wobei nebeneinanderliegende erste Übertragungsspulen der mehreren ersten Übertragungsspulen (75R) von einer Steuerschaltung derart gesteuert werden, dass jeweils nur eine der nebeneinanderliegenden ersten Übertragungsspulen (75R) Energie überträgt, und
wobei nebeneinanderliegende zweite Übertragungsspulen der mehreren zweiten Übertragungsspulen von einer Steuerschaltung derart gesteuert werden, dass jeweils nur eine der nebeneinanderliegenden zweiten Übertragungsspulen Energie überträgt.

8. Energieübertragungsvorrichtung nach Anspruch 7, wobei nebeneinanderliegende zweite Übertragungsspulen der mehreren zweiten Übertragungsspulen von einer Steuerschaltung derart gesteuert werden, dass jeweils nur eine der nebeneinanderliegenden zweiten Übertragungsspulen Energie überträgt.

9. Wagenladesystem, Folgendes umfassend:
eine Energieübertragungsvorrichtung nach Anspruch 7 oder 8 und
mehrere Wagen, wobei jeder Wagen
eine Energieempfangsvorrichtung nach einem der Ansprüche 1 bis 6 aufweist.

10. Wagenladesystem nach Anspruch 9, wobei
die erste Position an dem Wagen neben einer ersten Laufrolle des Wagens liegt und
die zweite Position neben einer zweiten Laufrolle des Wagens liegt,
die erste und die zweite Laufrolle sich an einem hinteren Abschnitt des Wagens befinden und
die mehreren Führungen derart positioniert sind, dass sie die erste und die zweite Laufrolle des Wagens aufnehmen.

11. Wagenladesystem nach Anspruch 9 oder 10, ferner Folgendes umfassend:
ein elektronisches Gerät an jedem Wagen und
eine Batterie an jedem Wagen und verbunden mit dem elektronischen Gerät an dem Wagen, wobei
der Gleichstrom von der Empfangsschaltung der Energieempfangsvorrichtung an dem Wagen mindestens einem von dem elektronischen Gerät und der Batterie zugeführt wird.

12. Wagenladesystem nach einem der Ansprüche 9 bis 11, wobei die Energieübertragungsvorrichtung ferner Folgendes umfasst:
einen Schaltstromkreis, der mit einer ersten Übertragungsspule verbunden ist, die einer ersten Position eines gestapelten Wagens entspricht, und einer zweiten Übertragungsspule, die einer zweiten Position des gestapelten Wagens entspricht, wobei der Schaltkreis dafür gestaltet ist, wahlweise eine von der ersten Übertragungsspule oder der zweiten Übertragungsspule mit einer Übertragungsschaltung zu verbinden, die dafür gestaltet ist, der angeschlossenen einen der ersten und der zweiten Übertragungsspule Energie zuzuführen, und
eine Kurzschlussschaltung, die dafür gestaltet ist, die eine von der ersten Übertragungsspule und der zweiten Übertragungsspule, die nicht mit der Übertragungsschaltung verbunden ist, zu deaktivieren.

## Revendications

1. Appareil de réception d'énergie (20), comprenant :
une première bobine de réception (45R) à un premier emplacement sur un chariot (1) ;
une seconde bobine de réception (45L) à un second emplacement différent du premier emplacement sur le chariot (1);
un circuit de réception (42) configuré de manière à générer une puissance en courant continu à partir de l'énergie reçue par la première bobine de réception (45R) et la seconde bobine de réception (45L) ;
un circuit de commutation (41) configuré de manière à connecter sélectivement l'une parmi la première bobine de réception (45R) et la seconde bobine de réception (45L) au circuit de réception ; et
un circuit de mise en court-circuit (46R, 46L) configuré de manière à désactiver celle de la première bobine de réception (45R) et de la seconde bobine de réception (45L) qui n'est pas connectée au circuit de réception par le circuit de commutation ;
**caractérisé en ce que** :
le premier emplacement sur le chariot (1) est adjacent à une première roulette du chariot (1) et sensiblement perpendiculaire à la surface du sol ; et
le second emplacement est adjacent à une seconde roulette du chariot (1) et sensiblement perpendiculaire à la surface du sol, les première et seconde roulettes étant sur une partie latérale arrière du chariot (1).

2. Appareil de réception d'énergie (20) selon la revendication 1, comprenant en outre :
un circuit de commande (43) connecté au circuit de mise en court-circuit (46R, 46L) et configuré de manière à commander quelle bobine, parmi la première bobine de réception (45R) et la seconde bobine de réception (45L), est désactivée par le circuit de mise en court-circuit (46R, 46L).

3. Appareil de réception d'énergie (20) selon la revendication 1 ou 2, dans lequel le circuit de mise en court-circuit (46R, 46L) désactive ladite une bobine parmi la première bobine de réception (45R) et la seconde bobine de réception (45L), en mettant à la masse ladite une bobine parmi la première bobine de réception (45R) et la seconde bobine de réception (45L).

4. Appareil de réception d'énergie (20) selon l'une quelconque des revendications 1 à 3, dans lequel le premier emplacement est sur un premier côté du chariot (1) et le second emplacement est sur un second côté du chariot (1), opposé au premier côté.

5. Appareil de réception d'énergie (20) selon l'une quelconque des revendications 1 à 4, comprenant en outre :
une unité radio configurée de manière à recevoir une communication sans fil en provenance d'un système d'émission de puissance, indiquant quelle bobine, parmi la première bobine de réception (45R) et la seconde bobine de réception (45L), doit être connectée au circuit de réception par le circuit de commutation.

6. Appareil de réception d'énergie (20) selon l'une quelconque des revendications 1 à 5, comprenant en outre :
un dispositif électronique sur le chariot (1) ; et
une batterie sur le chariot (1) et connectée au dispositif électronique, dans laquelle
la puissance en courant continu provenant du circuit de réception est fournie à au moins l'un des éléments parmi le dispositif électronique et la batterie.

7. Appareil d'émission d'énergie (30'), comprenant :
une pluralité de guides incluant un premier guide (31Rr) sur un premier côté et un second guide (31Rl) sur un second côté opposé au premier côté, la pluralité de guides étant configurée de manière à recevoir des chariots dans une configuration d'empilement ;
une pluralité de premières bobines d'émission (75R) le long du premier guide (31Rr), les premières bobines d'émission (75R) étant positionnées de manière à correspondre à un premier emplacement sur un chariot dans la configuration d'empilement, les bobines de la pluralité de premières bobines d'émission (75R) étant positionnées de manière adjacente entre elles à des intervalles correspondant à une distance entre un ou plusieurs chariots reçus dans la configuration d'empilement ;
une pluralité de secondes bobines d'émission (75L) le long du second guide (31Rl), les secondes bobines d'émission (75L) étant positionnées de manière à correspondre à un second emplacement sur un chariot dans la configuration d'empilement, les bobines de la pluralité de secondes bobines d'émission étant positionnées de manière adjacente entre elles à des intervalles correspondant à une distance entre un ou plusieurs chariots reçus au niveau de la configuration d'empilement ;
un circuit de commutation connecté à une première bobine d'émission (75R) correspondant à un premier emplacement d'un chariot empilé et à une seconde bobine d'émission correspondant à un second emplacement du chariot empilé, le circuit de commutation étant configuré de manière à connecter sélectivement l'une parmi la première bobine d'émission (75R) et la seconde bobine d'émission à un circuit d'émission configuré de manière à fournir de l'énergie à la bobine connectée parmi les première et seconde bobines d'émission ;
un circuit de mise en court-circuit configuré de manière à désactiver celle de la première bobine d'émission (75R) et de la seconde bobine d'émission qui n'est pas connectée au circuit d'émission par le circuit de commutation ;
dans lequel des premières bobines d'émission adjacentes de la pluralité de premières bobines d'émission (75R) sont commandées par un circuit de commande, de sorte que seule l'une des premières bobines d'émission adjacentes (75R) transmet de l'énergie à un instant donné ; et
dans lequel des secondes bobines d'émission adjacentes de la pluralité de secondes bobines d'émission sont commandées par le circuit de commande, de sorte que seule l'une des secondes bobines d'émission adjacentes transmet de l'énergie à un instant donné.

8. Appareil d'émission d'énergie selon la revendication 7, dans lequel des secondes bobines d'émission adjacentes de la pluralité de secondes bobines d'émission sont commandées par un circuit de commande, de sorte que seule l'une des secondes bobines d'émission adjacentes transmet de l'énergie à un instant donné.

9. Système de recharge de chariot, comprenant :
un appareil d'émission d'énergie selon la revendication 7 ou 8 ; et
une pluralité de chariots, chaque chariot présentant :
un appareil de réception d'énergie selon l'une quelconque des revendications 1 à 6.

10. Système de recharge de chariot selon la revendication 9, dans lequel :
le premier emplacement sur le chariot est adjacent à une première roulette du chariot ;
le second emplacement est adjacent à une seconde roulette du chariot ;
les première et seconde roulettes sont sur la partie latérale arrière du chariot ; et
les guides de la pluralité de guides sont positionnés pour accepter les première et seconde roulettes du chariot.

11. Système de recharge de chariot selon la revendication 9 ou 10, comprenant en outre :
un dispositif électronique sur chaque chariot ; et
une batterie sur chaque chariot et connectée au dispositif électronique sur le chariot, dans lequel
la puissance en courant continu en provenance du circuit de réception de l'appareil de réception d'énergie sur le chariot est fournie à au moins l'un des éléments parmi le dispositif électronique et la batterie.

12. Système de recharge de chariot selon l'une quelconque des revendications 9 à 11, l'appareil d'émission d'énergie comprenant en outre :
un circuit de commutation connecté à une première bobine d'émission correspondant à un premier emplacement d'un chariot empilé et à une seconde bobine d'émission correspondant à un second emplacement du chariot empilé, le circuit de commutation étant configuré de manière à connecter sélectivement l'une parmi la première bobine d'émission et la seconde bobine d'émission à un circuit d'émission configuré de manière à fournir de l'énergie à la bobine connectée parmi les première et seconde bobines d'émission ; et
un circuit de mise en court-circuit configuré de manière à désactiver la bobine, parmi la première bobine d'émission et la seconde bobine d'émission, qui n'est pas connectée au circuit d'émission par le circuit de commutation.
